# EUROPÄISCHE PATENTSCHRIFT

(11) **EP 2 987 732 B1**
(45) Veröffentlichungstag und Bekanntmachung des Hinweises auf die Patenterteilung: **02.05.2018**
(21) Anmeldenummer: 14181654.6
(22) Anmeldetag: 20.08.2014
(51) Int. Cl.: B65B 3/02, B29C 49/12, B08B 9/027, B29C 49/46

(54) **Formfüllmaschine**
Mould filling machine
Remplisseuse de moule

(43) Veröffentlichungstag der Anmeldung: 24.02.2016
(73) Patentinhaber: Krones AG, 93073 Neutraubling (DE)
(72) Erfinder: Albrecht, Thomas, 93073 Neutraubling (DE)
(74) Vertreter: Grünecker Patent- und Rechtsanwälte PartG mbB

(56) Entgegenhaltungen:
- EP-A1- 2 255 949
- EP-A1- 2 520 539
- EP-A1- 2 669 070
- EP-A1- 2 818 302
- EP-A2- 2 283 991
- WO-A1-2012/156013
- WO-A1-2013/145511
- WO-A1-2013/147065
- WO-A1-2014/103188
- WO-A1-2015/059104
- WO-A1-2015/158559
- WO-A2-2006/108380
- DE-A1-102011 110 840
- US-A1- 2005 098 230

## Beschreibung

Die Erfindung betrifft eine Formfüllmaschine nach dem Oberbegriff des Anspruchs 1.

### Stand der Technik

Bekanntermaßen lassen sich Kunststoffbehälter im Streckblasverfahren aus Vorformlingen herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Darüber hinaus zeigt die WO 2012/156013 A1 eine Vorrichtung für die integrierte Produktion und Befüllung von Behältern und ein Verfahren zum Reinigen und/oder Desinfizieren wenigstens einer Form wenigstens einer Formfüllstation dieser Vorrichtung. Während einer Reinigung oder Desinfizierung der Vorrichtung wird wenigstens die Innenseite der Form mit einem Mittel gereinigt oder desinfiziert, wobei wenigstens eine Form während der Reinigung möglichst mehrfach geöffnet oder geschlossen wird.

Eine Formfüllmaschine umfasst definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die.Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

### Aufgabe

Aufgabe der vorliegenden Erfindung ist es, bekannte Vorrichtungen und Verfahren zum Ausformen und Füllen von Kunststoffbehältern in vorteilhafter Weise weiterzubilden.

### Lösung

Diese Aufgabe wird mit einer Formfüllmaschine nach Anspruch 1 gelöst. Vorteilhafte Ausführungsformen der Erfindung sind in den Unteransprüchen definiert.

Die erfindungsgemäße Formfüllmaschine zur Lösung der obigen Aufgabe ist dadurch gekennzeichnet, dass das Füllventil von der Umgebung isoliert werden kann und in Isolation gereinigt werden kann, wobei die Form zwei Formhälften und einen Boden umfasst und die Formhälften und der Boden derart beweglich ausgebildet sind, dass die Formhälften auseinander bewegt werden können und der Boden zwischen den auseinander bewegten Formhälften hindurch in Richtung des Füllventils bewegt werden und das Füllventil umschließen kann. Gemäß dieser erfindungsgemäßen Formfüllmaschine ist es nicht mehr notwendig das Füllventil zum Zweck der Reinigung auszubauen, so dass beispielsweise zwischen zwei unterschiedlichen Füllchargen eine Reinigung des Füllventils erfolgen kann. Durch das Isolieren des Füllventils kann das Umherspritzen von Reinigungsmedium oder von in dem Füllventil verbliebenem Produkt vermieden werden, sodass die übrige Formfüllmaschine dadurch nicht beeinträchtigt wird.

Ferner kann ein flüssiges oder gasförmiges Reinigungsmedium verwendet werden. Ein flüssiges Reinigungsmedium kann eine sehr hohe Reinigungswirkung entfalten wohingegen ein gasförmiges Reinigungsmedium nahezu ohne Rückstände aus dem Füllventil abgesaugt werden kann, sodass der weitere Betrieb störungsfrei verlaufen kann und nicht eventuell durch das Füllventil abgefülltes Produkt mit dem Reinigungsmedium verunreinigt wird. Eine nicht beanspruchte Ausführungsform sieht vor, dass das Füllventil in einer Reinigungsstellung einfahrbar ist, wobei in der Reinigungsstellung eine Reinigungseinrichtung angeordnet ist, die das Füllventil reinigen kann. Diese Reinigungsstellung kann beispielsweise bei rotierenden Formfüllmaschinen zwischen den Zuförderern und den Abförderern für die Vorformling bzw. Behälter angeordnet sein, sodass bei notwendiger Reinigungen die entsprechende Formfüllstation mit dem Füllventil in diese Position gefahren und von der Reinigungseinrichtung gereinigt wird.

### Kurze Beschreibung der Figuren

- Figur 1:: schematische Darstellung einer beispielhaften Formfüllmaschine
- Figur 2:: schematische Darstellung eines nicht beanspruchten Beispiels mit Schnellwechselsystem
- Figur 3:: schematische Darstellung eines nicht beanspruchten Beispiels mit Kappe
- Figur 4:: schematische Darstellung eines nicht beanspruchten Beispiels mit Form als Kappe
- Figur 5:: schematische Darstellung einer Ausführungsform mit Formboden als Kappe
- Figur 6:: schematische Darstellung eines Beispiels mit zusätzlicher Spülung für die Formen

### Ausführliche Beschreibung

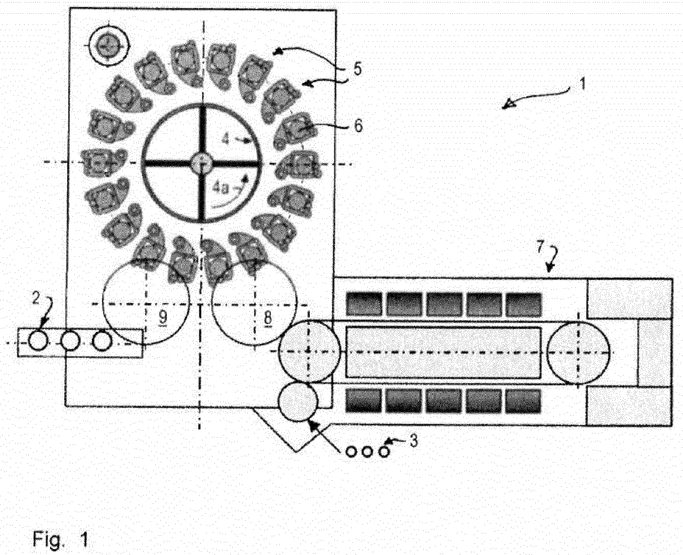

in Figur 1 ist eine Fromfüllanlage 1 mit einer beispielhaften Formfüllmaschine 6 dargestellt. Diese umfasst in der hier dargestellten Ausführungsform ein Karussell 4, das sich in der Drehrichtung 4a drehen kann. An dem Karussell 4 sind ein oder mehrere Formfüllstationen 5 angeordnet, in denen ein Vorformling ausgeformt und befüllt werden kann. Dazu umfassen die Formfüllstationen 5 jeweils eine Hohlform, in der der Vorformling eingespannt werden kann, und in der der Vorformling ausgeformt und auch bei geschlossener Hohlform befüllt wird. Zu diesem Zweck ist vorgesehen, dass jede Formfüllstation über ein oder mehrere Füllventile zum Abfüllen von Produkt in den Vorformling und/oder in den Behälter verfügt.

Die Vorformlinge können aus einem Ofenbereich 7 über entsprechende Mittel zum Transport 8, wie beispielsweise Drehsterne oder Förderer, dem Karussell 4 zugeführt werden, wobei der Transport der Vorformlinge beispielsweise im Neck-Handling-Verfahren erfolgen kann. Zwischen dem Ofenbereich 7 und dem Karussell 4 können beispielsweise weitere Behandlungseinrichtungen, wie Inspektionseinrichtungen, Reinigungseinrichtungen oder Ähnliches angeordnet sein.

Die befüllten und ausgeformten Behälter können aus dem Karussell über eine entsprechende Transporteinrichtung 9, wie beispielsweise einen Drehstern, aus dem Karussell 4 abtransportiert werden. Die ausgeformten und befüllten Behälter 2 können dann beispielsweise weiteren Behandlungseinrichtungen, wie einem Verschließer oder Etikettiereinrichtungen oder Druckeinrichtungen zugeführt werden. Diese können ebenfalls als Bestandteil der Formfüllmaschine 6 verstanden werden. Grundsätzlich umfasst die Formfüllmaschine jedoch wenigstens ein Karussell mit entsprechenden Formfüllstationen, in denen die Behälter bzw. Vorformlinge ausgeformt und befüllt werden.

Gemäß dieses nicht beanspruchten Beispiels ist vorgesehen dass das Füllventil von der Formfüllstation abtrennbar ist. Zu diesem Zweck ist vorgesehen, dass das Füllventil und die Formfüllstation miteinander über schnellwechselbare Verbindungen oder Verbindungssysteme verbunden sind. Zu diesen Systemen zählen beispielsweise Steck- oder Klickverbindungen.

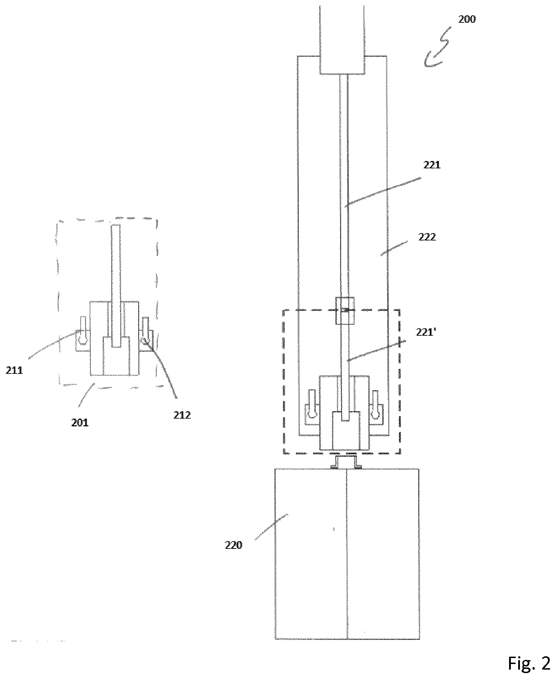

Figur 2 zeigt eine solche beispielhaften Ausführung, bei der ein Füllventil 201 in eine Formfüllstation 200 eingebaut ist. Diese Formfüllstation umfasst beispielsweise eine Hohlform oder Form 220, in der ein Vorformling zum Ausformen positioniert werden kann. Weiterhin umfasst die Formfüllstation die wesentlichen Vorrichtungen zum Einfüllen des Produkts und zum Ausformen des Vorformlings zu einem Behälter. Dazu zählt beispielsweise aber nicht notwendigerweise eine Reckstange 221 und ein Form/Füllblock 222 in dem diese Reckstange zusammen mit dem Füllventil 201 angeordnet werden kann. Der Block 222 bildet gemeinsam mit der Form 220 die Formfüllstation.

Das Füllventil kann einen Teil der Reckstange 221' umfassen bzw. an diesem angeordnet sein. Die dargestellten Verbindungselemente 211 und 212 bilden in Verbindung mit entsprechenden beispielsweise komplementären Verbindungselementen in der Formfüllstation 200 bzw. dem Form/Füllblock 222 die schnellwechselbare Verbindung.

Vorteilhaft ist, wenn die Reckstange 221 zweiteilig ausgebildet ist, wobei der Teil 221' zusammen mit dem Füllventil 201 lösbar mit der Formfüllstation verbunden ist. Dabei kann vorgesehen sein, dass der in der Füllstation angeordnete Teil der Reckstange 221 über ähnliche lösbare Verbindungen, insbesondere über magnetische oder elektromagnetische Verbindungen mit dem Teil 221' der Reckstange verbindbar ist.

Die komplementäre Verbindung 211, 212 kann entweder mechanisch beispielsweise über Exzenterhebel, Spannhebel, Centerlockhebel und entsprechende komplementäre Verbindungsstücke in der Formfüllstation gebildet werden oder über magnetische bzw. elektromagnetische Verbindungen. Dazu kann vorgesehen sein, dass das Füllventil über einen Dauermagneten verfügt bzw. diesen umfasst oder ein ferromagnetisches Material aufweist. Dieses kann beispielsweise in Form eines Ringes, der das Füllventil umschließt, vorgesehen sein. An der Formfüllstation kann dann entweder ebenfalls ein Dauermagnet oder besonders bevorzugt ein Elektromagnet angeordnet sein, der mit dem Dauermagnet des Füllventils elektromagnetisch verbunden werden kann. Über geeignete Wahl der Feldstärken, insbesondere bei Verwendung eines Elektromagneten, kann so ein sicherer Halt des Füllventils gewährleistet werden und gleichzeitig eine einfache Lösbarkeit des Füllventils durch Abschalten des Elektromagneten erreicht werden. So können unerwünschte Stillstandszeiten beim Austausch der Füllventile vermieden bzw. verringert werden.

Während in den bisherigen Beispielen beschrieben wurde, dass das Füllventil von der Formfüllstation trennbar ist, kann nach einem weiteren nicht beanspruchten Beispiel vorgesehen sein, dass das Füllventil zusammen mit beispielsweise der Reckstange oder anderen Komponenten, wie beispielsweise ein Kolben zum Einleiten der abzufüllenden Flüssigkeit in das Füllventil als Form/Füllblock zusammengefasst sind. Dieser Form/Füllblock kann schnellwechselbar mit den übrigen Elementen der Formfüllstation verbunden sein, sodass nicht nur das einzelne Füllventil sondern die gesamte Anordnung aus Füllventil und Form/Füllblock von der Formfüllstation abgenommen werden kann. Die beschriebenen Beispiele für die schnellwechselbaren Verbindungen können auch an dem Form/Füllblock vorgesehen sein, um diesen an der Formfüllstation zu befestigen.

Das abgenommene Füllventil bzw. der abgenommene Form/Füllblock kann dann gereinigt oder anderen Arbeiten, wie beispielsweise Wartungsarbeiten, zugeführt werden. Ebenso können sie abhängig von bestimmten Produktionsparametern, wie beispielsweise unterschiedlichen abzufüllenden Flüssigkeiten (beispielsweise kohlensäurehaltige Flüssigkeiten oder stille Flüssigkeiten oder Flüssigkeiten mit unterschiedlicher Viskosität), ausgetauscht werden.

Insbesondere mit Hinblick auf die Reinigung des Füllventils und/oder des Form/Füllblocks kann alternativ vorgesehen sein, dass das Füllventil von der Umgebung isoliert werden kann. In diesem isolierten Zustand kann dann eine Reinigung mithilfe einer Reinigungsvorrichtung erfolgen.

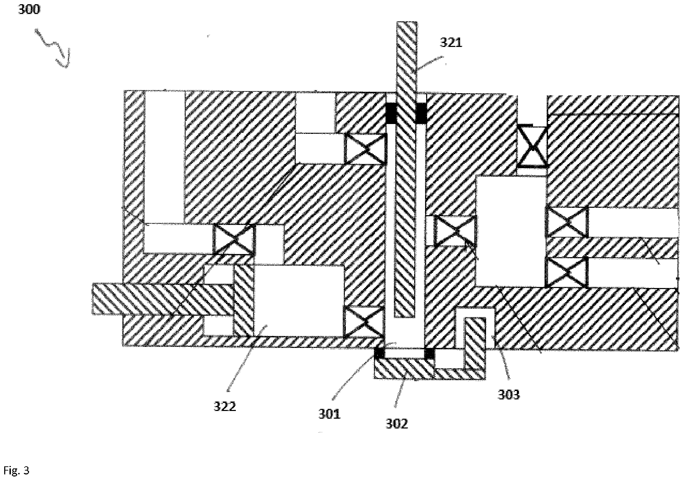

Dazu zeigt Figur 3 eine nicht beanspruchte Ausführungsform, bei der an einer Formfüllstation 300 ein Füllventil 301 angeordnet ist. Diese Anordnung des Füllventils 301 kann beispielsweise unterhalb oder in der Nähe der Reckstange 321 vorgesehen sein.

Um das Füllventil 301 in dieser Ausführungsform zumindest von der Umgebung außerhalb der Formfüllstation 300 zu isolieren, ist eine Kappe 302 vorgesehen, die über das Füllventil 301 gestülpt bzw. bewegt werden kann. Dazu kann beispielsweise eine Lagerung 303 vorgesehen sein, mit der die Kappe 302 an der Formfüllstation gelagert ist. Die Kappe 302 kann um die Lagerung 303 beweglich gelagert sein so dass die Kappe 302 entweder über das Füllventil 301 geschwenkt werden kann oder in Richtung auf das Füllventil zugefahren werden kann. Ist die Kappe über das Füllventil 301 gefahren worden, so kann beispielsweise über eine entsprechende Zuleitung in der Formfüllstation Reinigungsmedium in den Bereich der von der Kappe von der Umgebung isoliert wurde und in dem sich das Füllventil 301 befindet, eingeleitet werden, um das Füllventil zu reinigen. Diese Zuleitung kann entweder separat vorgesehen sein oder beispielsweise durch den Kolben 322 erfolgen durch den üblicherweise das Medium zum Abfüllen in den Behälter über das Füllventil 301 geführt wird. So kann gleichzeitig eine Reinigung dieses Bereichs der Formfüllstation erfolgen. Dies ist insbesondere dann von Vorteil wenn eine Änderung des in die Behälter abzufüllenden Produkts erfolgt.

Alternativ dazu kann auch vorgesehen sein, dass das Reinigungsmedium nicht durch das Füllventil geleitet wird, sondern zunächst über Leitungen, die in die Kappe 302 führen, in die von der Kappe eingeschlossene Umgebung eingeleitet wird. Das Füllventil kann dann mit der in der Kappe bzw. in dem von der Kappe eingeschlossenen Raum befindlichen Reinigungsmedium gereinigt werden. Das Reinigungsmedium kann anschließend oder kontinuierlich wieder aus der Kappe heraus geleitet werden.

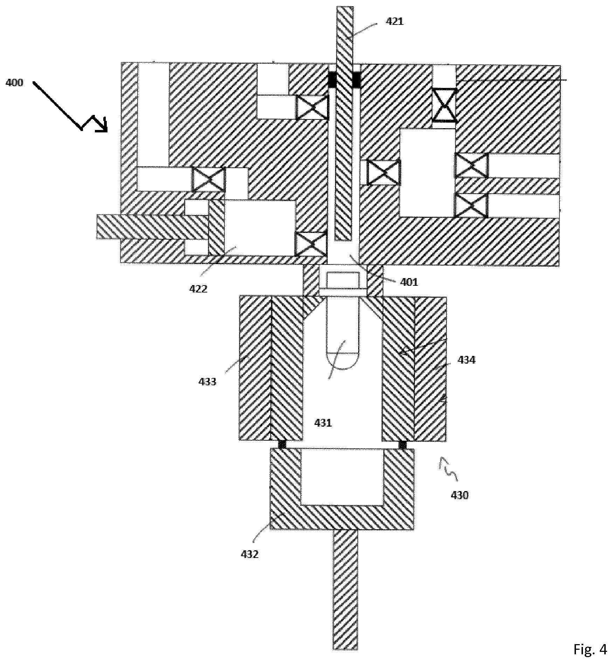

Figur 4 zeigt ein zur Figur 3 alternatives, nicht beanspruchtes Beispiel, bei dem als Vorrichtung zum Isolieren des Füllventils 401 von der Umgebung der Formfüllstation 400 keine separate Kappe, sondern die Blasformen bzw. Form, in der der Behälter aus dem Vorformling ausgeformt wird, verwendet wird. Dazu kann die Form 430, die üblicherweise zwei Formhälften 433 und 434 sowie einen Boden 432 umfasst, an das Füllventil 401 herangefahren werden, sodass ein vorzugsweise luft- und/oder flüssigkeitsdichtes Verschließen des Füllventils 401 gegenüber der Umgebung der Formfüllstation 400 erfolgt. Dabei kann die Position der Form 430 zum Verschließen des Füllventils 401 entweder der üblichen Position beim Ausformen eines Behälters aus dem Vorformling entsprechen oder eine besondere Reinigungsstellung der Form 430 sein.

Die Zuleitung von Reinigungsmedium kann beispielsweise durch separate Zuleitungen erfolgen, die mit einem Speicher für Reinigungsmedium verbunden sein können. Dieser kann auf dem Karussell angeordnet sein. Insbesondere kann jeder Formfüllstation ein separater Speicher zugeordnet sein. Diese können je nach Notwendigkeit separat gefüllt werden oder mit einem Versorgungssystem, das in der Formfüllmaschine oder außerhalb der Formfüllmaschine angeordnet sein kann, verbunden sein. Über dieses Versorgungssystem kann den Speichern Reinigungsmedium zugeleitet werden. Es kann auch vorgesehen sein, dass ein oder mehrere Speicher außerhalb des Karussells angeordnet sind und über Zuleitungen mit den einzelnen Formfüllstationen verbunden sind. Insbesondere kann hierzu ein zentraler Drehverteiler in der Formfüllmaschine angeordnet sein, der über eine zentrale Zuleitung das Reinigungsmedium aus den außerhalb angeordneten Speichern den einzelnen Formfüllstationen zuleiten kann.

Dabei ist es besonders vorteilhaft, wenn während der Reinigung die Form 430 nicht vollständig leer ist, sondern ein "Behälter" 431, der beispielsweise die Form eines Vorformlings haben kann oder anders geformt sein kann, in der Form 430 positioniert ist, um die überschüssige Menge an Reinigungsmedium aufzunehmen. Da die Innenseite der Form 430 beim Ausformen eines Behälters vorzugsweise trocken sein muss, ist die Verwendung eines solchen speziellen Behälters 431 insbesondere bei Reinigung mit einem flüssigen Reinigungsmedium vorteilhaft.

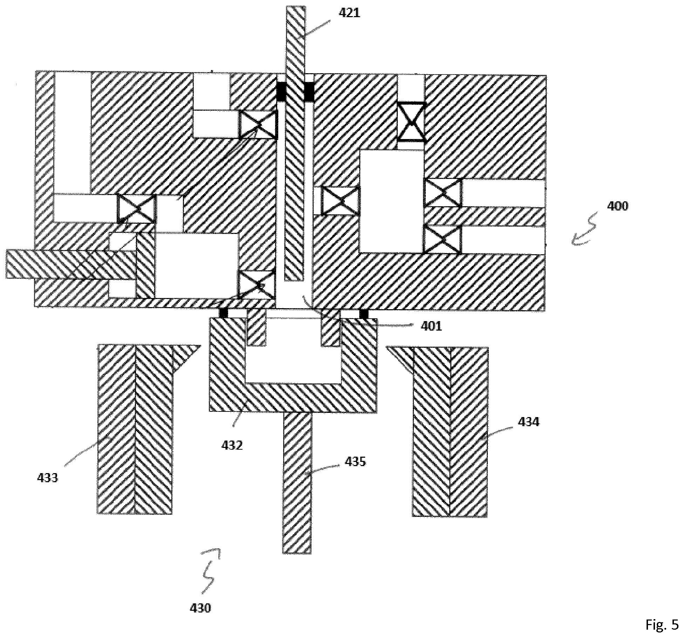

Figur 5 zeigt eine Ausführungsform der Erfindung, bei der nicht die gesamte Form um das Füllventil 401 geschlossen wird, sondern bei der die Formhälften 433 und 434 so weit auseinandergefahren werden, dass der Boden 432 der Form 430 in Richtung des Füllventils 401 verfahren werden und dieses umschließen kann. So kann das Volumen, in den das Reinigungsmedium eingeleitet wird, verringert werden, was insbesondere bei Verwendung von flüssigen Reinigungsmedien vorteilhaft ist, da so Reinigungsmedium eingespart werden kann und trotzdem eine entsprechende Reinigung des Füllventils 401 erfolgen kann. Um die Bewegung des Bodens 432 der Form 430 zu ermöglichen, kann vorgesehen sein, dass der Boden 432 auf einer bewegbaren Halterung 435 angeordnet ist. Dabei kann es sich beispielsweise um eine mittels eines Stellantriebs bewegbare Achse handeln.

Die Zuführung von Reinigungsmedium kann analog zu dem in Figur 4 beschriebenen Beispiel, insbesondere auch mit einem zusätzlichen Behälter, erfolgen.

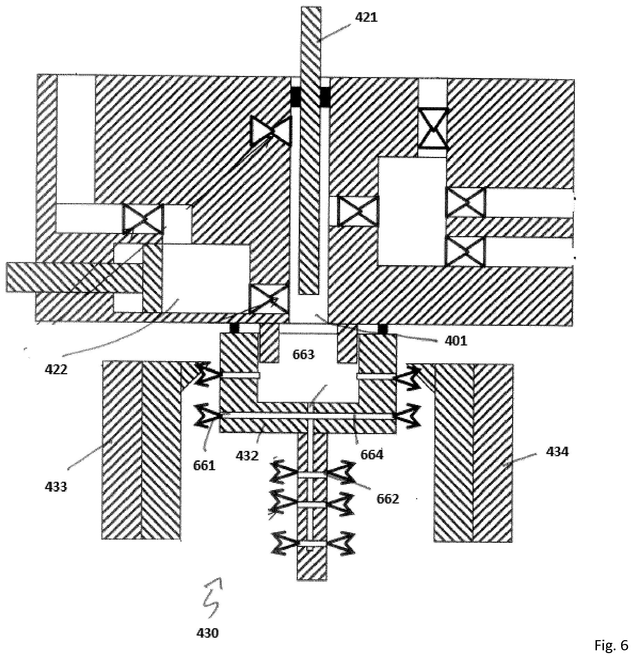

Figur 6 zeigt eine weitere Ausführungsform. Hierbei handelt es sich um eine analoge Ausführungsform zu der in Figur 5 dargestellten. Zusätzlich zu der Möglichkeit, das Füllventil 401 mit Reinigungsmedium zu reinigen, sind hier im Boden 432 der Form 430 Leitungen 661 bis 664 vorgesehen. Durch diese kann das Reinigungsmedium, das durch das Füllventil 401 geleitet wird, aus dem Boden 433 ausgeleitet werden. Das austretende Reinigungsmedium kann dann beispielsweise zur Reinigung der übrigen Teile der Form, insbesondere der Formhälften 433 und 434 genutzt werden. Dies erlaubt bei der Reinigung des Füllventil 401 entweder jedes Mal oder in Abhängigkeit bestimmter Reinigungszyklen eine Reinigung der Form 430, ohne dass die Form 430 dafür ausgebaut oder einer zusätzlichen Reinigungseinrichtung zugeführt werden muss. Die Leitungen 661-664 können dafür separat verschließbar sein.

Alternativ zu den in Figur 3 bis 6 dargestellten Beispielen und Ausführungsformen kann auch vorgesehen sein, dass entweder das Füllventil zusammen mit der in Figur 3 beschriebenen Kappe oder das Füllventil zusammen mit der um dieses geschlossenen Form aus der Formfüllstation herausgefahren wird und einer zusätzlichen Reinigungseinheit bzw. Reinigungseinrichtung zugeführt wird.

## Patentansprüche

1. Formfüllmaschine (6) mit einer oder mehrerer Formfüllstationen (5) zum Formen von Vorformlingen zu Behältern und Füllen der Behälter in einer Form (430) der Formfüllstation (400) wobei ein Füllventil (401) in der Formfüllstation (400) angeordnet ist, über das Produkt in den Behälter gefüllt werden kann, wobei das Füllventil (401) von der Umgebung isoliert werden kann und in Isolation gereinigt werden kann, wobei die Form (430) zwei Formhälften (433, 434) und einen Boden (432) umfasst **dadurch gekennzeichnet dass** die Formhälften und der Boden derart beweglich ausgebildet sind, dass die Formhälften auseinander bewegt werden können und der Boden zwischen den auseinander bewegten Formhälften hindurch in Richtung des Füllventils (401) bewegt werden und das Füllventil umschließen kann.

2. Formfüllmaschine nach Anspruch 1, **dadurch gekennzeichnet, dass** sie dazu ausgebildet ist ein flüssiges oder gasförmiges Reinigungsmedium zu verwenden.

## Claims

1. Mold filling machine (6) with one or more mold filling stations (5) for forming preforms into containers and filling the containers in a mold (430) of the mold filling station (400), wherein a filling valve (401) is arranged in the mold filling station (400), via which product can be filled into the container, wherein the filling valve (201) can be isolated from the environment and can be cleaned in isolation, wherein the mold (430) comprises two mold halves (433, 434) and a bottom (432), **characterized in that** the mold halves and the bottom are made movable such that the mold halves can be moved apart and the bottom can be moved between and through the moved-apart mold halves towards the filling valve (401) and can enclose the filling valve.

2. Mold filling machine according to claim 1, **characterized in that** it is configured to use a liquid or gaseous cleaning medium.

## Revendications

1. Machine de formage et de remplissage (6) comprenant un ou plusieurs postes de formage et de remplissage (5) pour assurer le formage de préformes en des contenants et le remplissage de ces contenants, dans un moule (430) du poste de formage et de remplissage (400), machine
dans laquelle une vanne de remplissage (401) est agencée dans le poste de formage et de remplissage (400) et permet de remplir le contenant avec un produit,
dans laquelle la vanne de remplissage (401) peut être isolée de l'environnement et peut être nettoyée dans l'état d'isolement,
dans laquelle le moule (430) comprend deux moitiés de moule (433, 434) et un fond (432),
**caractérisée en ce que** les moitiés de moule et le fond sont d'une configuration mobile, de façon telle que les moitiés de moule puissent être déplacées de manière à s'écarter l'une de l'autre, et que le fond puisse être déplacé en direction de la vanne de remplissage (401), entre les moitiés de moule écartées l'une de l'autre, en venant enfermer la vanne de remplissage.

2. Machine de formage et de remplissage selon la revendication 1, **caractérisée en ce qu'**elle est conçue pour utiliser un agent de nettoyage liquide ou gazeux.
